## Europäisches Patentamt
## European Patent Office
## Office européen des brevets

(11) Numéro de publication: **0 347 272**
**A1**

# DEMANDE DE BREVET EUROPEEN

(21) Numéro de dépôt: **89401465.3**

(22) Date de dépôt: **30.05.89**

(51) Int. Cl.⁴: **F 16 L 37/28**
**F 16 L 29/00**

(30) Priorité: **14.06.88 FR 8807900**

(43) Date de publication de la demande:
**20.12.89 Bulletin 89/51**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Monteil, Michel**
**25, rue de Versailles**
**F-78150 Le Chesnay (FR)**

(74) Mandataire: **Ernst-Schonberg, Michel et al**
**R.N.U.R. S. 0804 B.P. 103 8 & 10, avenue Emile-Zola**
**F-92109 Boulogne Billancourt (FR)**

(54) **Dispositif de raccordement entre deux parties d'un circuit de fluide dont l'une contient un fluide.**

(57) Dispositif de raccordement entre deux parties (1, 6.7) d'un circuit de fluide dont une partie (1) contient un fluide et est isolée de l'autre partie (6.7) par au moins un obturateur (15) temporaire rendu inactif au cours du raccordement de cette autre partie (6.7) et de l'établissement d'une circulation de fluide entre ces deux parties, caractérisé par le fait que l'obturateur (15) solidaire d'une partie est constitué par un bouchon coopérant avec un embout de raccordement (8, 8' - 9, 9') portée par l'autre partie (6.7), ledit embout présentant un orifice (22, 22') d'établissement de la circulation du fluide entre lesdites parties à la suite de l'inactivité de l'obturateur.

FIG. 2

## Description

## DISPOSITIF DE RACCORDEMENT ENTRE DEUX PARTIES D'UN CIRCUIT DE FLUIDE DONT L'UNE CONTIENT UN FLUIDE

L'invention concerne un dispositif de raccordement entre deux parties d'un circuit de fluide dont l'une contient un fluide et est isolée de l'autre partie par au moins un obturateur temporaire rendu inactif au cours du raccordement de cette autre partie et de l'établissement d'une communication de fluide entre ces deux parties.

La publication FR-A 2.263.450 décrit un dispositif de raccordement par rotation relative des éléments qui établit la communication de fluide entre les deux parties.

La mise en oeuvre de ce dispositif ne peut être assurée sur une chaîne de montage de véhicule du fait de l'impossibilité fréquente d'opérer le mouvement de rotation requis à l'établissement de la circulation du fluide.

L'invention a pour objet un dispositif de raccordement par suite d'une translation d'un élément par rapport à l'autre et d'une modification de l'élément obturateur d'un état actif d'obturation d'un conduit à un état d'inactivité.

Un autre objet de l'invention est un dispositif de raccordement dans lequel les éléments de raccordement portent des organes d'accrochage mutuel dont la mise en service assure l'état d'inactivité de l'obturateur et un positionnement angulaire des éléments.

Selon l'invention, l'obturateur est solidaire d'une partie du circuit et est constitué par un bouchon coopérant avec une tubulure de raccordement portée par l'autre partie, ladite tubulure présentant un orifice d'établissement de la circulation du fluide entre lesdites parties à la suite de l'inactivité de l'obturateur.

Le dispositif ainsi réalisé s'applique notamment au raccordement rapide et étanche d'un échangeur de chaleur tel qu'un radiateur sur une partie d'un circuit de refroidissement prérempli et plus généralement au raccordement de fluide entre deux modules préassemblés tels qu'un moteur et un radiateur de chauffage ou un aérotherme par l'emploi d'un réservoir de fluide branché sur la partie préremplie du circuit.

Selon une autre caractéristique du dispositif, une partie du circuit porte un moyen de verrouillage qui s'étend axialement vers l'autre partie portant un moyen coopérant à l'immobilisation relative des deux parties.

Cette mesure constructive simplifie l'accouplement ou le débranchement des modules sans nécessiter d'outillage spécial.

D'autres caractéristiques et avantages de l'invention ressortiront de la description d'un exemple de réalisation du dispositif en référence au dessin annexé dans lequel :

    - La figure 1 est une représentation schématique du circuit de fluide complet,

    - La figure 2 est une vue en coupe axiale du raccord assemblé,

    - La figure 3 est une section partielle du raccord selon la ligne 3-3 de la figure 2,

    - La figure 4 est une vue en coupe axiale des éléments séparés du raccord,

    - La figure 5 est une section des extrémités inférieures des tubulures 13, 13' suivant la ligne 5-5 de la figure 4,

    - La figure 6 est une vue en coupe axiale du raccord assemblé selon une variante d'implantation de l'orifice by-pass asservi,

    - La figure 7 est une vue en coupe axiale d'un exemple de réalisation du bouchon,

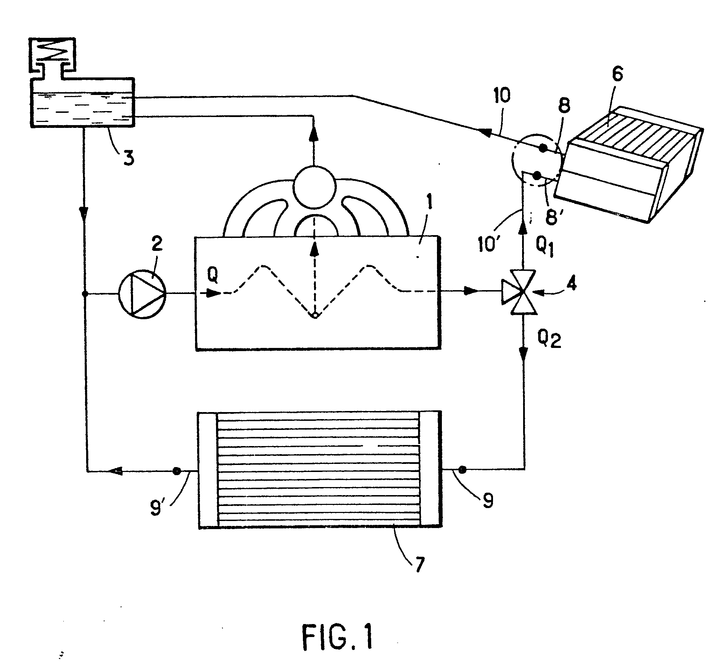

Le circuit représenté à la figure 1 est constitué par une première partie comportant un moteur thermique 1 à circulation interne du fluide de refroidissement débité par une pompe 2 de débit Q à l'entrée de laquelle est branché un réservoir 3.

En sortie du moteur 1 est branché un diviseur de débit thermostatique 4.

Une partie $Q_1$ du débit Q alimente un radiateur de chauffage ou échangeur de chaleur 6 branché sur le réservoir 3.

Une partie $Q_2$ du débit Q alimente un radiateur de refroidissement 7 branché sur l'orifice d'aspiration de la pompe 2.

La deuxième partie du circuit est constituée par l'échangeur 6 ou par le radiateur 7 étant entendu que ces termes désignent plus généralement des installations telles qu'un aérotherme ou un climatiseur ou tout autre système à radiateurs.

Les parties du circuit telles que 6, 7 possèdent des embouts de raccordement 8, 8' - 9, 9' de durites 10, 10' faisant partie intégrante de la partie du circuit préremplie par le fluide et constituée notamment par le moteur 1 et par les durites telles que 10, 10'.

Dans ce qui suit, nous décrivons à titre d'exemple le raccordement des durites 10, 10' sur le radiateur de chauffage 6, mais il est bien entendu que la disposition inventive s'applique tout aussi bien au raccordement d'une telle durite au radiateur conventionnel tel que 7 par suite d'un aménagement des orifices d'entrée et de sortie dudit radiateur.

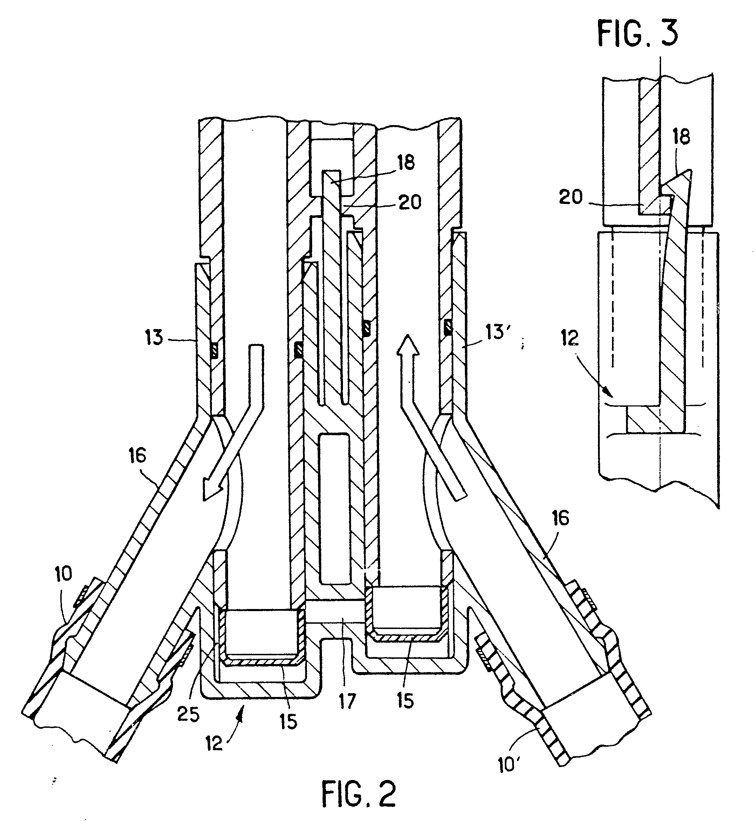

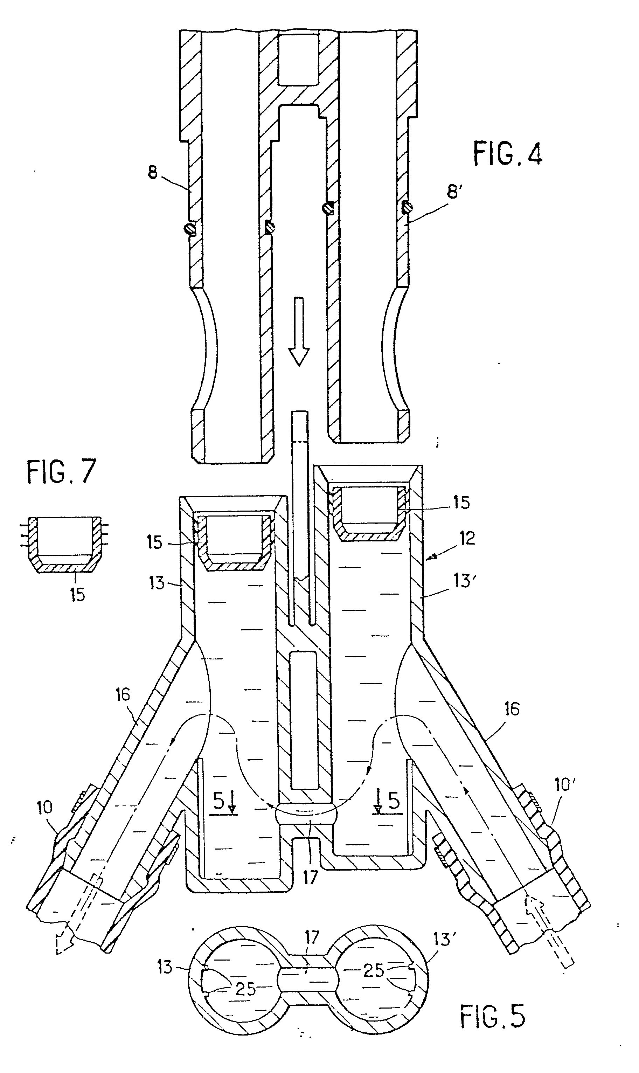

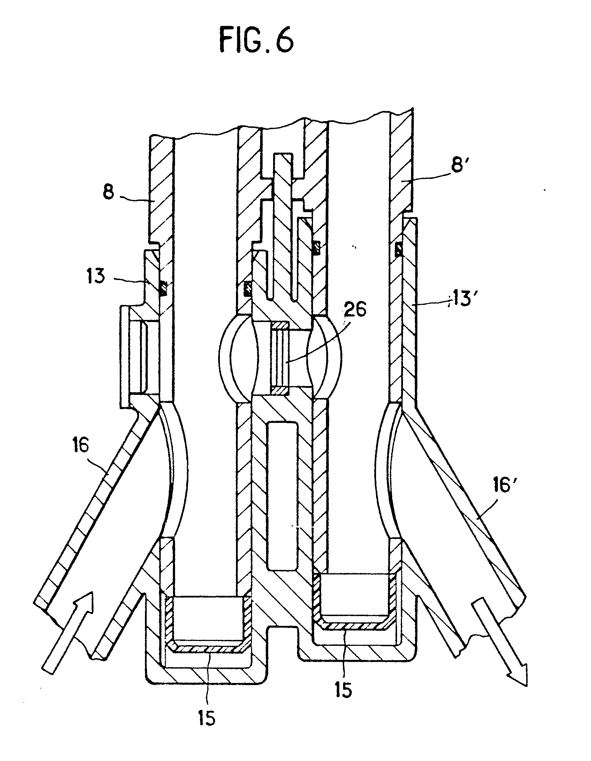

En se référant plus particulièrement aux figures 2 à 5, les durites 10, 10' sont fixées à un raccord 12 constitué par un couple de tubulures 13, 13' dont chacune contient un obturateur 15 et une dérivation 16 de branchement des durites 10, 10'. Les tubulures 13, 13' sont en communicaton au travers d'un orifice 17 de by-pass.

Selon un aspect de l'invention, l'orifice de by-pass 17 contient un régulateur du débit qui peut entrer en service à partir d'une valeur de seuil dans le but de réduire la circulation du fluide d'une partie vers l'autre du circuit dans certaines conditions de fonctionnement du moteur.

En effet, lorsque la vitesse du moteur 1 augmente, il peut être intéressant de limiter l'importance du trajet de fluide en isolant la partie telle que 6 du reste du circuit. Dans ces conditions, le régulateur entre en fonction en ouvrant l'orifice 17 et mettant en communication les durites 10, 10' en isolant partiellement le radiateur 6. Cet artifice limite la puissance mécanique prélevée par la pompe 2 sur le moteur 1, lorsque le régime de ce dernier est élevé.

Les tubulures 13, 13' portent, par ailleurs, un crochet de verrouillage 18 qui s'étend axialement vers les embouts de raccordement 8, 8' du radiateur de chauffage 6 portant une barrette 20 faisant office de moyen d'immobilisation axiale et angulaire des parties précitées du circuit.

Les embouts de raccordement 8, 8' du radiateur 6 portent des joints d'étanchéité toriques 21, 21' et des orifices 22, 22' d'établissement sans fuites vers l'extérieur de la circulation du fluide entre les parties 1, 6 à la suite de l'inactivité de l'obturateur 15.

Lorsque l'obturateur 15 est constitué, ainsi que cela a été décrit, par un bouchon coulissant étanche, l'effort d'emmanchement des embouts 8, 8' dans les tubulures 13, 13' a pour effet de déplacer axialement les bouchons vers une position d'inactivité montrée à la figure 2 dans laquelle le crochet 18 est bloqué par la barrette 20 tandis que le fluide emprisonné derrière les bouchons est laminé par des rainures saillantes 25 situées au fond des tubulures 13, 13'.

Sans sortir du cadre de l'invention, il sera bien entendu possible de réaliser l'obturateur 15 par une membrane destructible à la suite de l'effort d'emmanchement précité ou de réaliser celui-ci par un diaphragme à ouverture mécanique obtenue lors de l'introduction des embouts dans les tubulures.

De même, le dispositif de raccordement avec ses moyens d'étanchéité peut être réalisé :
- sans orifice de by-pass 17,
- avec un orifice de by-pass neutralisé lors du raccordement,
- avec un orifice de by-pass 26 à diaphragme déclenché dans le sens de l'ouverture par suite de l'établissement d'une différence de pression préétablie entre les tubulures 13 et 13',
- avec un orifice de by-pass à ouverture permanente.

## Revendications

1) Dispositif de raccordement entre deux parties (1, 6.7) d'un circuit de fluide dont une partie (1) contient un fluide et est isolée de l'autre partie (6.7) par au moins un obturateur (15) temporaire rendu inactif au cours du raccordement de cette autre partie (6.7) et de l'établissement d'une circulation de fluide entre ces deux parties, caractérisé par le fait que l'obturateur (15) solidaire d'une partie est constitué par un bouchon coopérant avec un embout de raccordement (8,8' - 9,9') portée par l'autre partie (6.7), ledit embout présentant un orifice (22, 22') d'établissement de la circulation du fluide entre lesdites parties à la suite de l'inactivité de l'obturateur.

2) Dispositif selon la revendication 1, caractérisé par le fait que l'obturateur (15) est rendu inactif sous l'effet d'une poussée axiale communiqué par l'embout de raccordement.

3) Dispositif selon la revendication 2, caractérisé par le fait que l'obturateur (15) est monté à coulissement dans une tubulure (13, 13') de raccordement entre une position d'isolation et une position de mise en communication de l'écoulement du fluide entre les deux parties (1,6.7)

4) Dispositif selon l'une quelconque des revendications 1 à 3, caractérisé par le fait qu'une partie (6) du circuit porte un moyen (18) de verrouillage qui s'étend axialement vers l'autre partie (6) portant un moyen (20) coopérant à l'immobilisation axiale et angulaire des deux parties du circuit.

5) Dispositif selon l'une quelconque des revendications 1 à 3, caractérisé par le fait que les deux parties du circuit coopèrent par un couple de tubulures (13, 13') mises en communication au travers d'un orifice (17) de by-pass.

6) Dispositif selon la revendication 5, caractérisé par le fait que l'orifice (17) de by-pass contient un moyen de régulation du débit mis en service à partir d'une valeur de seuil dans le but de réduire la circulation du fluide d'une partie vers l'autre au cours d'une augmentation du débit de fluide dans l'une desdites parties.

FIG.1

FIG. 3

FIG. 2

FIG. 4

FIG. 7

FIG.5

## FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 584 524 (SHIPLEY) <br> * figures 1-3 * <br> --- | 1-4 | F 16 L 37/28 <br> F 16 L 29/00 |
| A | DE-B-2 623 934 (DRAEGERWERK) <br> * figure 1 * <br> --- | 1-4 | |
| A | EP-A-0 135 140 (AERO-PUMP) <br> * figures 1,2 * <br> --- | 1-3 | |
| A | FR-A-2 074 375 (TICO) <br> * figure 1 * <br> --- | 5,6 | |
| A | DE-B-1 425 583 (WALTHER) <br> * figure 7 * <br> --- | 5,6 | |
| D,A | FR-A-2 263 450 (DUCELLIER & CO.) <br> ----- | | |

|  |
|---|
| DOMAINES TECHNIQUES RECHERCHES (Int. Cl.4) |
| F 16 L |

Le présent rapport a été établi pour toutes les revendications

| Lieu de la recherche | Date d'achèvement de la recherche | Examinateur |
|---|---|---|
| BERLIN | 30-08-1989 | SCHLABBACH M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant